(19) Europäisches Patentamt
European Patent Office
Office européen des brevets

(11) EP 3 187 464 A1

(12) EUROPEAN PATENT APPLICATION

(43) Date of publication:
05.07.2017 Bulletin 2017/27

(21) Application number: 15203280.1

(22) Date of filing: 31.12.2015

(51) Int Cl.:
*C01F 7/06* (2006.01) *C02F 5/10* (2006.01)
*C23F 14/02* (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Cytec Industries Inc.
Woodland Park NJ 07424 (US)

(72) Inventors:
- SONG, Airong
STAMFORD, CT 06904 (US)
- CYWAR, Douglas A.
DANBURY, CT 06810 (US)
- CALBICK, Chester Joe
WESTON, CT 06883 (US)

(74) Representative: Vande Gucht, Anne et al
Solvay S.A.
Intellectual Assets Management
Rue de Ransbeek, 310
1120 Bruxelles (BE)

# (54) COMPOSITE COATINGS FOR SCALE REDUCTION

(57) The invention relates to a process for reducing aluminosilicate containing scale in a Bayer process, comprising the steps of identifying a Bayer process equipment surface that is subject to scale formation during the Bayer process; contacting the identified Bayer process equipment surface with an amount of a scale inhibiting composition effective to form a treated surface that is more resistant to scale formation upon subsequent contact with a Bayer process stream than an otherwise comparable untreated surface; wherein the scale inhibiting composition comprises a liquor L which is an aqueous solution of one or more water-soluble salts having at least a mass fraction of 0.004 % of total dissolved salts, or an aqueous solution having a pH of at least 11.0, a silicon-containing compound I having one or more $Si(OR'')_n$ groups; wherein n is an integer from 1 to 3; and R'' is H, $C_1$- to $C_{20}$- alkyl, $C_6$- to $C_{12}$- aryl, $C_7$- to $C_{20}$- aralkyl, $C_2$- to $C_{20}$- alkenyl, any of which organic groups may be substituted, a metal ion of groups 1 or 2 of the periodical system of the elements in the 2007 numbering, or $NR^I_4$; where each $R^I$ is independently chosen from H, $C_1$- to $C_{20}$- alkyl, $C_6$- to $C_{12}$- aryl, $C_7$- to $C_{20}$- aralkyl, $C_2$- to $C_{20}$- alkenyl, any of which organic groups may be substituted; and inorganic particles **P**, and contacting the treated surface with the Bayer process stream.

EP 3 187 464 A1

## Description

Field of the Invention

This invention relates to composite coatings for scale reduction in alumina recovery process streams, particularly in a Bayer process.

Background of the Invention

Two processes for recovering alumina from raw bauxite ore, or bauxite are mainly used, the Bayer process and the sinter process. Combinations of these processes are also used, as well as modifications of each process.

The Bayer process is an industrial process used to manufacture alumina from raw bauxite ore, or bauxite. Bauxite is principally composed of aluminium compounds including hydrargillite which is $Al(OH)_3$, diaspore which is alpha-AlO(OH), boehmite which is gamma-AlO(OH), oxide ($Al_2O_3$), commonly referred to as alumina, accompanied by the iron oxide minerals goethite and hematite, kaolinite which is an aluminosilicon hydroxide, and anatase which is $TiO_2$, and small amounts of other impurities. These companion elements have to be separated from the ore to yield the desired pure alumina. These impurities are separated during refining the alumina ore as insolubles which comprise a mixture of oxides, commonly designated as "red mud" due to the red colour caused by the presence of iron oxide.

The Bayer process comprises milling raw bauxite ore, and heating or digesting the milled ore with a highly caustic solution also referred to as the digestion liquor. Digestion liquor generally includes a caustic aqueous solution of sodium hydroxide (NaOH) together with spent liquor recycled from the alumina precipitation process. Dissolution is effected at high temperatures in order to fully dissolve all aluminum-bearing minerals, especially alumina trihydrate (gibbsite) and alumina monohydrate (boehmite and/or diaspore), yielding a supersaturated solution of sodium aluminate $Na^+ Al(OH)_4^-$ also referred to as "pregnant liquor". Red mud containing iron oxides remains undissolved in this digestion liquor and must be removed prior to isolation of the purified alumina.

As mentioned above, bauxite ores used in the Bayer process also contain impurity minerals comprising silica in various forms and amounts, depending on the source of the bauxite. The caustic solution used to dissolve the aluminum minerals also dissolves part or all of the silica content of the bauxite, especially silica present in the form of aluminosilicate clays. The resulting concentrations of dissolved salts in the digestion liquor are very high, with sodium hydroxide concentrations typically being 150 g/L (grammes per litre) or greater, and dissolved alumina typically being 120 g/L or greater, calculated as $Al_2O_3$. Some of the silicate minerals rapidly dissolve in the digestion step to form solutions that are supersaturated with silica. At least part of this dissolved silica then reacts with the sodium aluminate $Na^+Al(OH)_4^-$ present in solution to form insoluble complex hydrated sodium aluminum silicates, generally designated as desilication products or "DSP". These complex insoluble hydrated sodium aluminum silicates or DSP formed in the digestion process must be removed from the digestion liquor along with the red mud solids prior to isolation of the purified alumina product in the precipitation and calcination steps. Removal of red mud from the digestion or pregnant liquor is generally achieved by one or more solid-liquid separation steps involving sedimentation and/or filtration or other solids/liquid separation techniques, most often with the aid of a flocculant. Often, substantially all of the solids are removed from the digestion liquor; however, in some cases minor amounts of solids may not be separated from the liquor. Some of the silica that remains dissolved in the pregnant liquor can, at a later point in the process after removal of the solids, combine with aluminate ions to form insoluble complex aluminosilicate minerals such as sodalite or cancranite, which then have a tendency to precipitate out on the surfaces of Bayer process equipment as mineral scale.

After separation or filtration, the clarified pregnant liquor is then cooled and seeded with alumina trihydrate to precipitate a portion of the dissolved alumina in the form of alumina trihydrate $Al(OH)_3$, which is then isolated by sedimentation and/or filtration before being calcined. After the alumina precipitation step, the remaining low solids solution (also called "spent liquor") is reheated and recycled to the digestion step. This process of heating low solids spent liquor prior to its addition to the bauxite ore in the digestion step is referred to in the industry as a "double stream process". As the spent liquor still contains dissolved aluminate and silicate anions, further processing of this liquor, especially heating, often causes deposition of aluminosilicate scales on the surface of Bayer process equipment such as heat exchangers. This scaling process poses a significant problem for the industry in that it can foul equipment and affect process efficiency.

In plants that operate a "single stream process", fresh bauxite is mixed with the spent liquor before going through the heat exchangers on the way to digestion. As such, in single stream processes the liquor that is exposed to heat exchanger surfaces also contains red mud solids originating from the freshly charged bauxite. Thus, in single stream processes, the Bayer process stream that is prone to scaling is now contaminated with significant amounts of undissolved red mud solids which leads to a significantly higher solids content, which markedly reduces the efficacy of prior art scale inhibition processes, such as the double stream process describe above. The amounts of undissolved red mud solids present in the heat exchanger liquor in a single stream plant can be as much as from 30 g/L to 150 g/L or even more, versus 10 mg/L or less in a low solids double stream process. Thus, there is also a need for improved methods of

inhibiting scale formation on the surface of Bayer process equipment in single stream plants.

In heat exchangers used to reheat spent liquor, the high temperatures increase the rate of aluminosilicate precipitation. As a result, aluminosilicates form as scale on the walls of the heat exchangers and other associated process equipment which are in contact with these process streams. The scale is usually in the form of sodalite or cancrinite, but other aluminosilicate scales can also form scale. This scale has low thermal conductivity compared to that of the steel walls, resulting in heat transfer being severely reduced as scale builds up. The reduction in heat transfer caused by aluminosilicate scaling can be so severe that the heat exchange units have to be taken out of service and cleaned frequently, as often as every one to two weeks. In addition to the obvious cost of maintenance and labor required to clean the scale from the heat exchangers, the impact of scale on the equipment can also be seen in increased energy consumption, reduced liquor flows, reduced throughput, reduced evaporation and even reduced production.

As described above, in a double stream process spent liquor is reheated in heat exchangers before it is contacted with fresh bauxite. Therefore, spent liquor in a double stream plant ordinarily does not contain large quantities (e.g., not exceeding 10 mg/L) of insoluble solids such as red mud solids which may adversely affect the performance of scale inhibitors. However, in single stream plants (as well as some double stream plants, especially those that employ sand filters), the content of red mud solids can be great enough (e.g., as much as from 50 mg/L to 150 mg/L) to adversely affect scale inhibitor performance. Thus, there is also a need for improved methods of inhibiting scale formation on the surface of Bayer process equipment in double stream plants where the spent liquors contain undissolved solids, particularly higher concentrations of undissolved solids.

The sinter process is an alternative or adjuvant to the Bayer process, and is commonly used for the treatment of high silica-containing bauxites. In the sinter process, the bauxite (or "red mud") is calcined at 1200 °C with soda and/or lime prior to leaching with NaOH solution, generating sodium aluminate liquor (also commonly referred to as "supersaturated green liquor") and insoluble "sinter mud".

Bulk dosing in situ methods are known in the art where scale inhibitors containing -Si(OR)n groups, wherein n = 1, 2, or 3, are added to process streams. Such in situ methods include dosing "small molecule" scale inhibitors containing -Si(OR)$_n$ groups to process streams in the Bayer process.

In addition to dosing scale inhibitors containing -Si(OR)n groups, other techniques have included direct addition (bulk dosing) of methyl and ethyl siliconates to Bayer liquor, as well as a variety of other compounds such as ammonium salts, aromatic amines, amine compounds, polymeric quaternary ammonium compounds, polyamine polymers, copolymers of acrylic acid and acrylamide, and polyacrylamides. Bulk dosing of silica particles and dosing of water-soluble polymers with carboxylic acid groups in Bayer liquor is also known.

Besides bulk dosing, other methods for reduction of aluminosilicate scale in the Bayer process include a process of contacting at least a portion of at least one surface of at least one piece of Bayer process equipment with a scale inhibiting composition of matter in the absence of any liquor, wherein the scale inhibitor is a "small molecule" scale inhibitor containing -Si(OR)n groups, such as disclosed in WO 2012/115 769 A2.

In US 4,731,259 A, pretreatment of surfaces of Bayer process equipment with thermosetting epoxy/urethane resins is described to inhibit scale formation. This coating process involves a curing reaction that is both laborious and time-consuming, and further requires use of a thick layer resin which could compromise heat transfer.

The publication by Spitzer et al., in "LIGHT METALS" (2008), pp. 57 to 62 describes the problem of ineffectiveness of scale inhibition in single stream plants.

In WO 2015/100 196 A1, a surface treatment method for reducing aluminosilicate containing scale in a Bayer process is disclosed which comprises contacting the surface of process equipment prone to scale formation with a liquid scale inhibiting composition which comprises an aqueous solution which is a solution comprising dissolved salts in a mass fraction of at least 0.004 %, or having a pH of at least 11, and a silicon-containing compound having one or more Si(OR)$_n$ groups, wherein n is an integer from 1 to 3; and R is H, $C_1$- to $C_{20}$- alkyl, $C_6$- to $C_{12}$- aryl, $C_7$- to $C_{20}$- aralkyl, $C_2$- to $C_{20}$- alkenyl, any of which organic groups may be substituted, a metal ion of groups 1 or 2 of the periodical system of the elements in the 2007 numbering, or $NR^I_4$; where each $R^I$ is independently chosen from H, $C_1$- to $C_{20}$-alkyl, $C_6$- to $C_{12}$- aryl, $C_7$- to $C_{20}$- aralkyl, $C_2$- to $C_{20}$- alkenyl, any of which organic groups may be substituted; and contacting the treated surface with the Bayer process stream.

None of these prior art processes fully solve the problems of treating Bayer process streams economically. Further, the literature does not address the problem of scaling in single stream processes. Thus, there is a need for improved methods of reducing or eliminating scale in the Bayer process.

## Summary of the Invention

It has been found, in the experiments on which the present invention is based, that the propensity of formation of scale, particularly in equipment which is in contact with Bayer process streams, can further be reduced by incorporation of particles which are preferably of nano scale, i. e. having particle sizes from 0.1 nm to 20 000 nm, of inorganic compounds into a liquid scale inhibiting composition which comprises an aqueous solution also referred to as "liquor", which liquor

contains dissolved salts in a mass fraction of at least 0.004 %, or has a pH of at least 11, and also comprises a silicon-containing compound having one or more Si(OR)n groups. In these groups, n is an integer from 1 to 3; and R is H, $C_1$- to $C_{20}$- alkyl, $C_6$- to $C_{12}$- aryl, $C_7$- to $C_{20}$- aralkyl, $C_2$- to $C_{20}$- alkenyl, any of which organic groups may be substituted, a metal ion of groups 1 or 2 of the periodical system of the elements in the 2007 numbering, or $NR^I_4$; where each $R^I$ is independently chosen from H, $C_1$- to $C_{20}$- alkyl, $C_6$- to $C_{12}$- aryl, $C_7$- to $C_{20}$- aralkyl, $C_2$- to $C_{20}$- alkenyl, any of which organic groups may be substituted.

## Detailed Description of the Preferred Embodiments

The process for reducing aluminosilicate containing scale in a Bayer process comprises identifying a Bayer process equipment surface that is subject to scale formation during the Bayer process; and contacting the identified Bayer process equipment surface with an amount of a scale inhibiting composition effective to form a treated surface that is more resistant to scale formation upon subsequent contact with a Bayer process stream than an otherwise comparable untreated surface; the scale inhibiting composition comprising as mandatory components a liquor **L** which contains dissolved salts in a mass fraction of at least 0.004 %, or has a pH of at least 11, inorganic particles **P** which are preferably selected from the group consisting of oxides, mixed oxides, hydroxides, and nitrides of elements of groups 2 to 15 of the periodic table of the elements, and a silicon-containing compound **I** having one or more $Si(OR'')_n$ groups; and wherein n is an integer from 1 to 3; and R" is H, $C_1$- to $C_{20}$-alkyl, $C_6$- to $C_{12}$- aryl, $C_7$- to $C_{20}$- aralkyl, $C_2$- to $C_{20}$- alkenyl, any of which organic groups may be substituted, a metal ion of groups 1 or 2 of the periodical system of the elements in the 2007 numbering, or $NR^I_4$; where each $R^I$ is independently chosen from H, $C_1$- to $C_{20}$- alkyl, $C_6$-to $C_{12}$- aryl, $C_7$- to $C_{20}$- aralkyl, $C_2$- to $C_{20}$- alkenyl, any of which organic groups may be substituted. These treated surfaces are then contacted with a Bayer process stream.

Preferably, the inorganic particles **P** have a particle size of from 0.1 nm to 20 000 nm, and particularly preferred, from 0.3 nm to 10 μm, as determined by any of the processes of dynamic light scattering, laser diffraction, scanning electron microscopy, and optical microscopy.

The inorganic particles are preferably oxidic particles, i. e. they comprise oxide of metals of groups 2 to 14 of the periodic system, i. e. from the beryllium group to the carbon group, and also mixed oxides of these elements, wherein in the context of this invention, ferrates, titanates, aluminates, and silicates, by way of example, are understood to be mixed oxides of iron, titanium, aluminium, or silicon, with the other metal(s) present in the oxidic materials.

The silicon-containing compound **I** is preferably a polymer or a polymeric reaction product, or a reaction product from one or more silicon-containing compound and one or more non-silicon-containing compounds.

A polymer or a polymeric reaction product comprises, on average, at least two constitutional repeating units in its molecules, for the purpose of this invention. In a preferred embodiment, the polymer or polymeric reaction product has a mass average molar mass of at least 500 g/mol.

In a preferred embodiment, the silicon containing compound **I** is a polymer or polymeric reaction product **I1** having pendant thereto a group or an end group according to Formula IV

$$-Si(OR'')_3 \qquad (IV)$$

where R" is, independently for each occurrence, H, optionally substituted $C_1$- to $C_{10}$- alkyl, optionally substituted $C_6$- to $C_{12}$- aryl, or **M,** where **M** is a group I metal ion, a group II metal ion, or $N(R^4)_4^+$, with $R^4$ being, independently for each occurrence, H or an optionally substituted $C_1$- to $C_{10}$- linear, branched, or cyclic alkyl group, and **M** is preferably $Na^+$, $K^+$ or $NH_4^+$.

The silicon-containing group of Formula IV can preferably be bound to a polymer chain by a bridging group as detailed in formula V:

$$- G - R - X - R' - Si(OR'')_3 \qquad (V)$$

wherein

G is a direct bond, -NH -, - NR" -, or - O - ;
R is a direct bond, >C=O, - O-, $C_1$- to $C_{10}$- alkanediyl, $C_6$- to $C_{10}$- arenediyl, or $C_7$- to $C_{10}$- aryl-alkanediyl;
X is a direct bond, -NH -, - NR"-, or - O -, amide - CO - NH-, urethane - O - CO - NH -, or urea - NH - CO - NH -;
R' is a direct bond, - O -, $C_1$- to $C_{10}$- alkanediyl, $C_6$- to $C_{10}$- arenediyl, or $C_7$- to $C_{10}$- aryl-alkanediyl.

A further preferred silicon-containing compound **I** is a polymer or a polymeric reaction product **I2** comprising a unit of Formula (I) and a unit of Formula (II)

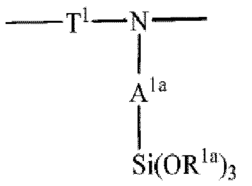
(I)

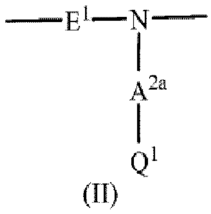
(II)

wherein $T^1$ and $E^1$ are each independently a first optionally substituted bivalent hydrocarbyl group comprising from two to forty carbon atoms; $Q^1$ is H or a second optionally substituted univalent hydrocarbyl radical comprising from one to twenty carbon atoms; $A^{1a}$ and $A^{2a}$ are each independently a direct bond or an organic bivalent connecting group comprising from one to twenty carbon atoms; $R^{1a}$ is H, an optionally substituted $C_1$- to $C_{20}$- alkyl group, an optionally substituted $C_6$- to $C_{12}$ -aryl group, an optionally substituted $C_7$- to $C_{20}$- aralkyl group, an optionally substituted $C_2$- to $C_{20}$- alkenyl group, a Group 1 metal ion (an ion of an alkali metal), a Group 2 metal ion (an ion of an alkaline earth metal which can bind two - O - Si groups), or an ammonium ion $NR^{2a}_4$, where each $R^{2a}$ is independently selected from H, an optionally substituted $C_6$- to $C_{12}$ -aryl group, an optionally substituted $C_7$- to $C_{20}$- aralkyl group, and an optionally substituted $C_2$- to $C_{20}$- alkenyl group.

It is further preferred that in **I2**, the organic bivalent connecting groups $A^{1a}$ and $A^{2a}$ are each independently represented by the sequence $-A^{3a}-A^{4a}-A^{5a}-A^{6a}-$, wherein:

- $A^{3a}$ is a direct bond, $-NR^{3a}-$ or -O-, where $R^{3a}$ is H or $C_1$- to $C_3$- alkyl;
- $A^{4a}$ is a direct bond, >C=O, optionally substituted $C_1$- to $C_{10}$- alkanediyl, or optionally substituted $C_6$- to $C_{12}$- arenediyl;
- $A^{5a}$ is a direct bond, -O-, $-NR^{4a}-$, amide - CO - NH-, urethane - O - CO - NH -, or urea -NH - CO - NH -, where $R^{4a}$ is H or $C_1$- to $C_3$- alkyl; and
- $A^{6a}$ is a direct bond, -O-, optionally substituted $C_1$- to $C_{20}$- alkanediyl, optionally substituted $C_2$- to $C_{20}$- alkenediyl or optionally substituted $C_7$- to $C_{20}$- aryl-alkanediyl; and

wherein at least one of the organic connecting groups $A^{1a}$ and $A^{2a}$ is $-CH_2-CH(OH)-CH_2-O-$ or an optionally substituted $C_1$- to $C_{10}$- alkanediyl, or optionally substituted $C_6$- to $C_{12}$- arenediyl group.

$Q^1$ is preferably chosen from butyl, 2-ethylhexyl, $C_8$- to $C_{10}$- alkyl, phenyl, cresyl, nonylphenyl, cetyl, octenyl, and octadecyl.

In another preferred embodiment, the silicon-containing compound **I** is a reaction product **I3** of at least a polyamine **I31,** a first nitrogen-reactive compound **I32**, and a second nitrogen-reactive compound **I33**, wherein:

- the polyamine **I31** comprises

  - a recurring unit of formula $- (CH_2)t - NR^6 -$, where $R^6$ is H, an optionally substituted $C_1$- to $C_{20}$- alkyl group, an optionally substituted $C_6$- to $C_{12}$- aryl group, an optionally substituted $C_7$- to $C_{20}$- aralkyl group, or an optionally substituted $C_2$- to $C_{20}$-alkenyl group, and t is from 1 to 10, preferably from 2 to 6,
  - a recurring unit of formula $- CH_2 - CH(Z - NR^7_2) -$, where Z is a direct bond or a bivalent group selected from $C_1$- to $C_{10}$-alkanediyl, $C_6$- to $C_{12}$-arenediyl, and $C_7$ - to $C_{20}$- alkyl-arenediyl groups, and $R^7$ is H, an optionally substituted $C_1$- to $C_{20}$- alkyl group, an optionally substituted $C_6$- to $C_{12}$- aryl group, an optionally substituted $C_7$-to $C_{20}$- aralkyl group, or an optionally substituted $C_2$- to $C_{20}$- alkenyl group, or

  - a moiety of formula $R^8_2N - X - NR^8_2$, where X is a divalent optionally substituted hydrocarbyl group having from two to forty carbon atoms, and $R^8$ is, independently for each occurrence, H, an optionally substituted $C_1$- to $C_{20}$- alkyl group, an optionally substituted $C_6$- to $C_{12}$- aryl group, an optionally substituted $C_7$- to $C_{20}$-aralkyl group, or an optionally substituted $C_2$- to $C_{20}$- alkenyl group.,

- the first nitrogen-reactive compound **I32** comprises a $-Si(OR^{1b})_3$ group and a nitrogen-reactive group, where $R^{1b}$ is H, optionally substituted $C_1$- to $C_{20}$- alkyl, optionally substituted $C_6$- to $C_{12}$- aryl, optionally substituted $C_7$- to $C_{20}$- aralkyl, optionally substituted $C_2$- to $C_{20}$ alkenyl, a Group 1 metal ion, a Group 2 metal ion, or $NR^{2b}_4$, each $R^{2b}$ being independently selected from H, optionally substituted optionally substituted $C_1$- to $C_{20}$- alkyl, optionally substituted $C_6$- to $C_{12}$ -aryl, optionally substituted $C_7$- to $C_{20}$- aralkyl, optionally substituted $C_2$- to $C_{20}$- alkenyl, the nitrogen-reactive group being selected from the group consisting of an organic halide group which is preferably an alkyl, alkenyl, or aralkyl halide group, an epoxide group, an isocyanate group, an acid group, an acid anhydride group, an acyl halide group, and a sulfate group, and

- the second nitrogen-reactive compound **I33** comprises a nitrogen-reactive group as detailed supra for **I32**, and does not contain a $Si(OR^{1b})_3$ group.

Preferably, the silicon-containing reaction product **I3** has a mass average molar mass of at least about 500 g/mol.

A nitrogen-reactive group is, in the context of this invention, a group that reacts with an amine, under formation of a chemical bond between the molecule having the said nitrogen-reactive group and the amine.

The polyamine **I31** is preferably selected from the group consisting of polyethyleneimine, polypropyleneimine, both in linear, branched, or dendrimeric form, aliphatic amines with two or more amino groups of formula $H_2N - (Y - NH)_q - Y - NH_2$, where Y is a bivalent $C_2$- to $C_{12}$-alkandiyl group that is linear, branched or cyclic, or a $C_6$- to $C_{12}$-arenediyl group, or a $C_7$-to $C_{15}$-alkylarenediyl group, and q is from 0 to 6, preferably $C_2$- to $C_{10}$- alkylene diamines, such as 1,2-diaminoethane, 1,3-diaminopropane, 1,4-diaminobutane, 1,5-diaminopentane, 1,5-diaminohexane, 1,6-diaminohexane, 2,2,4- trimethyl-1,6-diaminohexane, 2,4,4-trimethyl-1,6-diaminohexane, 1,8-diaminooctane, isophorone diamine; aromatic and alkylaromatic diamines such as aminoaniline and aminomethylbenzylamine; $C_2$- to $C_8$- dialkylene triamines such as diethylene triamine, bis-(3-aminopropyl)amine, bis(4-aminobutylamine), and bis-(6-aminohexyl)amine; $C_2$- to $C_8$- trialkylene tetramines, such as triethylene tetramine, N,N'-3-aminopropyl)-1,3-diamino-propane; $C_2$- to $C_8$-tetraalkylene pentamines, such as tetraethylene pentamine; $C_2$- to $C_8$- pentaalkylene hexamines, such as pentaethylenehexamine, and also tris(aminoalkylamines) with $C_2$- to $C_8$-alkanediyl groups such as tris-(2-aminoethyl) amine; polyvinylamine (Z is a direct bond), polyallylamine (Z is $- CH_2 -$), poly-4-amino-styrene, and copolymers of vinylamine and allylamine with other ethylenically unsaturated monomers which may also carry other functional groups such as vinylamides, particularly N-vinylformamide, N-vinyl-tert-butylcarbamate, and vinylacetals such as vinylbutyral. Copolymers of vinylacetals and vinylamides can be hydrolysed to form vinyl alcohol-vinylamine copolymers.

The first nitrogen-reactive compound **I32** is preferably chosen from triethoxysilylpropyl succinic anhydride, trimethoxysilylpropyl succinic anhydride, 3-glycidoxypropyltrimethoxysilane, 3-glycidoxypropyltriethoxysilane, and 3-chloropropyltrimethoxysilane.

The second nitrogen-reactive compound **I33** is preferably chosen from alkylhalides, glycidoxy ethers and alkyl epoxides, particularly methyl, ethyl, propyl, butyl, pentyl, hexyl, octyl, allyl, and benzyl chlorides, bromides, and iodides, epichlorohydrin, dimethyl sulfate, glycidyl 4-nonylphenol ether, butyl glycidyl ether, 2-ethylhexyl glycidyl ether, phenyl glycidyl ether, fatty alcohol glycidylethers, or mixtures of these such as mixtures of $C_{12}$- to $C_{14}$-alkylgylcidyl ethers, octenylsuccinic anhydride, and octadecenylsuccinic anhydride.

In another preferred embodiment, the silicon-containing compound **I** is a polymer **I4** according to Formula (III)

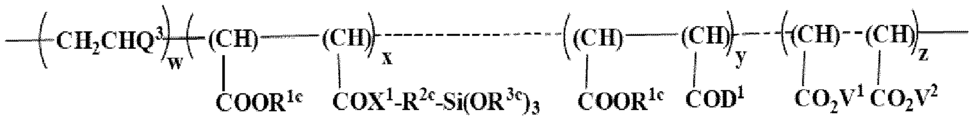

(III)

wherein

- 1 % ≤ w ≤ 99.9 %, 0.1% ≤ x ≤ 50%, 0% ≤ y ≤ 50%, 0% ≤ z ≤ 50% ; and w + x + y + z = 100 %;
- $Q^3$ is $C_1$- to $C_{10}$-alkyl, $C_6$- to $C_{12}$- aryl, an ether group which is preferably an - O - alkyl or - O - aryl group with a $C_1$- to $C_{10}$- alkyl or a $C_6$- to $C_{12}$- aryl group, or $COX^1R^{1c}$ where $X^1$ is -O-, -NH-, or $-NP^1-$ where $P^1$= $C_1$- to $C_3$- alkyl, $C_6$- to $C_{12}$-aryl,
- $R^{1c}$ is H, Na, K, $NH_4$, $C_1$- to $C_{10}$- alkyl or $C_6$- to $C_{12}$-aryl;
- $R^{2c}$ is $C_1$- to $C_{10}$- alkyl or $C_6$- to $C_{12}$-aryl;
- $V^1$ and $V^2$ are independently H, $C_1$- to $C_3$-alkyl, $C_6$- to $C_{12}$- aryl, Na, K or $NH_4$ or together form an anhydride ring of the structure:

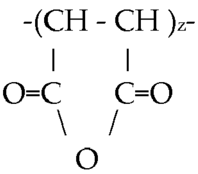

- $R^{3c}$ is H, $C_1$- to $C_3$- alkyl, $C_6$- to $C_{12}$- aryl, Na, K or $NH_4$; and
- $D^1$ is $-NR^{4c}_2$ or $-OR^{4c}$, wherein $R^{4c}$ is H, $C_1$- to $C_{20}$- alkyl, $C_2$- to $C_{20}$- alkenyl or $C_6$- to $C_{12}$-aryl.

In a further preferred embodiment, the silicon-containing compound **I** is a polysaccharide **I5** having pendant thereto a group or an end group containing -Si($OR^{1e}$)$_3$, wherein $R^{1e}$ is H, $C_1$-to $C_{10}$- alkyl, $C_6$- to $C_{12}$- aryl, Na, K or $NH_4$. The silicon-containing polysaccharides can be made by reacting a functionalised silicon-containing group A-Si($OR^{1e}$)$_3$ with a polysaccharide having functional hydroxyl, amino, or acid groups, such as hydroxyethyl cellulose, hydroxypropyl cellulose, carboxymethylcellulose, carboxymethyl guar, chitosan, and aminated hydroxypropylcellulose, where the functional group A is capable to react with hydroxyl groups, amino groups, or acid groups, under formation of a chemical bond to the polysaccharide, and preferably comprises an epoxide group, a glycidoxy group, an isocyanate group, an acid anhydride group, or a carboxyhalide group -CO-Hal, where Hal is preferably Cl, Br, or I.

In a further embodiment, the silicon-containing compound **I** is a reaction product **I6** of an amine-containing molecule **I61** and an amine-reactive molecule **I62** containing at least one amine-reactive group per molecule and at least one -Si($OR^{5e}$)$_n$ group per molecule, wherein $R^{5e}$ is hydrogen, $C_1$- to $C_{12}$- alkyl, $C_6$- to $C_{12}$- aryl, Na, K, Li, or $NH_4$.

The amine-containing molecule **I61** is selected from the same as **I31,** and the amine-reactive molecule **I62** is selected from the same as **I32**. Preferably, polyethyleneimine is used as **I61**.

In a further embodiment, the silicon-containing compound **I** comprises the reaction product **I7** of a first component **I71** having a general formula X or XI

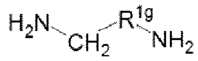

X

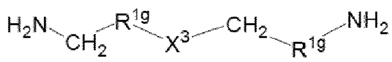

XI

wherein $R^{1g}$ is independently -$CH_2$-, or -$CH_2$-$CH_2$-; and $X^3$ is -NH-, -NH-$R^{1g}$-NH-, or -NH-$R^{1g}$-NH-$R^{1g}$-NH-;
glycidoxyalkyl-trialkoxysilanes are used as a second component **I72**, preferred is 3-glycidoxypropyltrimethoxysilane; and
$C_1$- to $C_{20}$- alkyl glycidyl ethers, preferably 2-ethylhexylglycidyl ether are used as a third component **I73**;

wherein synthesis of the reaction product **I7** proceeds by combining the first component **I71** with the glycidoxyalkyl-trialkoxysilane **I72** at a reactive hydrogen atom of the first component to form an intermediate **I712,** and the intermediate **I712** is then reacted with the component **I73** to form the silicon-containing reaction product **I7**.

In a still further embodiment, the silicon-containing compound **I** is a polymer **I8** having pendant thereto a group or end group according to Formula XII

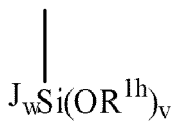

(XII)

wherein v is an integer of either 1 or 2;

- v + w = 3;
- $R^{1h}$ is chosen from H, $C_1$- to $C_{12}$- alkyl, $C_6$- to $C_{12}$- aryl, Na, K, Li, and $NH_4$; and
- J is chosen from H and a hydrocarbon group having a number of carbon atoms within the range of from 1 to 20.

Any polymer can be used, and polyethyleneimine is the preferred polymer.

In the Bayer process stream, the mass fraction of suspended solids is preferably in a range of from 0.01 % to about 60 %, based on the total mass of the Bayer process stream.

These suspended solids are usually iron oxides or aluminosilicates or both, most frequently iron oxides.

The silicon containing compounds **I** as mentioned supra can individually or in any combination, be added to the Bayer process streams as mentioned herein.

Preferably, the pH of the scale inhibiting composition is adjusted to be about 11.0 or greater.

The term "substituted", whether preceded by the term "optionally" or not, is used herein in its ordinary sense as understood by those skilled in the art. "Substituted" thus includes replacement of one or more hydrogen atoms in a

given structure with one or more substituent groups, which may be any permissible organic substituents of the given structure. Examples of substituents that may be permissible for a given structure include hydroxy; $C_1$- to $C_{10}$-alkyl; $C_1$- to $C_{10}$-alkenyl; allyl; halogen; $C_1$- to $C_{10}$-haloalkyl; $C_1$- to $C_{10}$-alkoxy; hydroxy $C_1$- to $C_{10}$-alkyl; carboxy; $C_1$- to $C_{10}$-carboalkoxy (also referred to as alkoxycarbonyl); $C_1$- to $C_{10}$-carboxyalkoxy; $C_1$- to $C_{10}$-carboxamido (also referred to as alkylaminocarbonyl); cyano; formyl; $C_1$- to $C_{10}$-acyl; nitro; amino; $C_1$- to $C_{10}$-alkylamino; $C_1$- to $C_{10}$-dialkylamino; anilino; mercapto; $C_1$- to $C_{10}$-alkylthio; sulfoxide; sulfone; $C_1$- to $C_{10}$-acylamino; amidino; phenyl; benzyl; heteroaryl; heterocycle; phenoxy; benzoyl; benzoyl substituted with amino, hydroxy, methoxy, methyl or halo; benzyloxy and heteroaryloxy. When the substituted group contains an alkyl segment, two hydrogen atoms on the same carbon atom may be replaced by a single substituent double bonded to the carbon atom, *e.g.,* oxo (=O).

Contacting the surfaces of process equipment such as tubing, evaporators, boilers, and tubular heat exchangers which are in contact with Bayer process streams, is preferably made by filling the vessels or tubes with the scale inhibiting composition so that the surfaces that come into contact with Bayer process streams are covered by the scale inhibiting composition. Preferably, the filled vessels or tubes are heated to at least 50 °C, and the scale inhibiting composition is agitated by proper means such as a pump, or stirrer, or the filled and sealed vessel or heat exchanger is attached to a carousel. Duration of the treatment is usually between ten minutes and twenty hours, it can be accelerated by heating. When the treatment is completed, vessels and tubes are emptied, and usually rinsed and dried before being assembled. The scale inhibiting composition can be re-used after replacing spent components.

**Examples**

In all examples, the synthetic Bayer liquor (SBL) used in the scaling tests contained aluminium (determined as mass concentration of $Al_2O_3$, 45 g/L, corresponding to 0.441 mol/L), sodium hydroxide (determined as mass concentration of NaOH, 120.0 g/L, corresponding to 3.0 mol/L), sodium carbonate (determined as mass concentration of $Na_2CO_3$, 60 g/L, corresponding to 0.566 mol/L), sodium sulfate (determined as mass concentration of $Na_2SO_4$, 20 g/L, corresponding to 0.1408 mol/L), and silicate (determined as mass concentration of $SiO_2$, 0.8 g/L), corresponding to a total of 245.8 g/L of total inorganic compounds. The synthetic Bayer liquor free from silicate ("no-Si SBL") samples used for the pre-treatment ("PT") steps did not contain any silica, but all other ingredients as listed for SBL, corresponding to a total of 245.0 g/L of dissolved inorganic compounds. The pH of the no-Si SBL sample was 13.5.

Carbon-steel (grade SA-36) pressure vessels of 42 ml total volume ("bombs") manufactured by the STEM corporation were used to simulate scaling and scale inhibition in a piece of Bayer process equipment such as a heat exchanger. For the pre-treatment, the bombs were filled with 30 mL of scale inhibiting composition, or for a "scaling run", with 30 mL of SBL, and sealed so as to withstand pressure generated as a result of heating. Each bomb was preweighed to 0.1 mg after (1) cleaning (abrading) the inner surface with a rotating wire brush attached to a drill press, (2) blowing out debris via an air jet, and (3) allowing to cool to room temperature. The width of the brush used for cleaning the inner surface of the bomb was about the same as the inner diameter of the bomb.

Agitation during the treating step was provided by clamping the bomb to a carousel contained within a forced-draught oven and rotating at 30 $min^{-1}$ for eighteen hours, generally at 100 °C.

After the treating step, the mixture was poured out and the bomb left to stand inverted on a paper towel for about two minutes to drain. The bomb was then filled with 30 ml of SBL containing red mud solids (400 mg/L for a scaling run). After being sealed, the steel bomb was then subjected to multiple scaling runs.

For multiple scaling runs, the bomb was rotated on the carousel for for seventy-five minutes at 150 °C. After the scaling run was completed, the bomb was cooled to room temperature (23 °C) while still rotating on the carousel and then opened. The liquid contents of the bomb were discarded, and the bomb then filled with 30 ml of fresh SBL containing red mud solids (400 mg/L for a scaling run) without allowing the inner walls to dry. The bomb was then placed on the carousel for another run. This was repeated for the number of desired scaling runs. After the final run, the bomb was cooled to room temperature (23 °C) while still rotating on the carousel and then opened.

The liquid contents of the bomb were discarded, the bomb rinsed with water, and then dried under reduced pressure (20 hPa) for one hour. The bomb was then filled for each determination of the amount of wall scale with 40 mL of aqueously diluted sulfuric acid having a mass fraction of 10 % of sulfuric acid, and was let sit at ambient temperature (23 °C) for sixty minutes to dissolve all sodalite scale on the steel wall. The silicon content of the acid solution, which was quantified by the inductively coupled plasma optical emission spectrometry (ICP-OES), represents the amount of sodalite scale formed on steel walls. The reduction $\Delta S$ in wall scale was calculated based on the equation below:

$$\Delta S = 100\ \% * [\gamma\,(\mathrm{Si, blank}) - \gamma\,(\mathrm{Si, PT})] / \gamma\,(\mathrm{Si, blank})$$

in which $\gamma$ (Si, blank) represents the measured silicon mass concentration of the dissolved wall scale solution in aqueously

diluted sulfuric acid for the blank run, i. e. without pre-treatment, and γ (Si, PT) represents the measured silicon mass concentration of the dissolved wall scale solution in aqueously diluted sulfuric acid for the treatment run. The same volume of aqueously diluted sulfuric acid, with the same acid concentration, was used in all tests.

The treatment process for the standard PT method is the same as described supra, in WO 2015/100 196 A1. The general preparation of the standard PT solution is described as follows:

(1) 30 mL of SBL was charged into the bomb.
(2) 600 μL of the inhibitor solution having a mass concentration γ(Inh) of 5 g/100 mL of the silicon-containing inhibitor compound Inh in the solution, was added to the 30 mL SBL present in the bomb to create a inhibitor solution with a mass concentration of inhibitor composition Inh in the combined solutions of 1000 mg/L.

The treatment process for the composite coating pre-treatment according to this invention is as described supra. The general preparation of the solution used in the composite coating pre-treatment is described as follows:

(1) certain amounts of silicon-containing inhibitor composition Inh and inorganic particles were added into a plastic beaker containing no-Si SBL at 25 °C,
(2) the above mixture was stirred for ten minutes at 25°C
(3) 30 mL of this mixture above were charged into the bomb

**Example** 1 **Preparation of silicon-containing compound 1 used in the following tests**

The silicon-containing compound 1 was prepared (Table 1) according to the procedure disclosed in Examples 35-52 (Product #7) in the patent US 7,999,065 B2. The procedure is as follows: 1.8998 g polyethyleneimine ("PEI", mass average molar mass $\boldsymbol{M}_w$ about 2000 g/mol) were mixed with 1.0003 g octyl/decyl glycidyl ether (CAS 68609-96-1) and 0.8353 g 3-glycidoxy-propyl trimethoxysilane, and the resulting mixture was heated at 100 °C for 18 h, giving the desired polymer as a soft friable gel. This polymer (Compound 1) was then diluted in an aqueous solution of sodium hydroxide with a mass fraction of NaOH of 2 % to give a stock solution having a mass fraction of 5 % of the polymer prior to use.

Table 1-Compositions of silicon-containing compound

| | |
|---|---|
| Example | 1 |
| Compound number | 1 |
| molar mass of polyethyleneimine | 2000 g/mol |
| hydrophobe compound | mixed octyl-decyl glycidyl ether, |
| Silane | (3-glycidoxypropyl) trimethoxysilane |
| Amount-of-substance ratio of hydrophobe to PEI | 0.10 mol/mol |
| Amount-of-substance ratio of silane to PEI | 0.08 mol/mol |

**Example** 2 **Comparison between standard pre-treatment with compound 1 and composite coating pre-treatment with compound 1 and goethite or $TiO_2$ nanoparticles**

The standard PT of C-steel mini-bombs with compound **1** (1000 mg/L) alone in no-Si SBL resulted in approximately a wall scale inhibition (Tests 2.2 and 2.3 in Table 2) Δ*S* of about 76 %, after three scaling runs (bombs rotated on the carousel for 75 min at 150 °C for each run, SBL containing red mud in a mass concentration of 400 mg/L), compared with the blank run (Test 2.1 in Table 2).

For comparison, the bombs were treated with solutions of compound **1** (1000 mg/L) and varied amounts (600 mg/L and 1200 mg/L) of goethite or $TiO_2$ nanoparticles according to the present invention in no-Si SBL (Test 2.4 to 2.9 in Table 2). After three scaling runs, higher wall scale reduction (85.6 %, Tests 2.4 and 2.5) was observed for composite coating pre-treatment comprising the inhibitor and particles with compound **1** (1000 mg/L) as inhibitor and goethite nanoparticles (600 mg/L). The composite coating pre-treatment with compound **1** (1020 mg/L) and $TiO_2$ nanoparticles (600 mg/L) also provided higher wall scale inhibition (81 %, Tests 2.8 and 2.9) than the standard PT with the compound **1** (1000 mg/L) only. The composite coating pre-treatment with compound **1** (1020 mg/L) and $TiO_2$ nanoparticles (1200 mg/L) (Tests 2.6 and 2.7) inhibited wall scale almost as well as the standard PT with compound **1** (1000 mg/L) only.

Generally speaking, Example 2 (Table 2) demonstrates that pre-treatment of steel surfaces with both scale inhibitors and goethite or $TiO_2$ nanoparticles exhibited better performance in inhibiting wall scale formation.

Table 2

| Test | Unit | 2.1 | 2.2 | 2.3 | 2.4 | 2.5 | 2.6 | 2.7 | 2.8 | 2.9 |
|---|---|---|---|---|---|---|---|---|---|---|
| mass concentration of Inhibitor (compound 1) | mg/L | 0 | 1000 | | | | | | | |
| particle type | | none | none | none | goethite* | | $TiO_2$** | | | |
| particle size | Nm | | | | < 30 | | < 21 | | | |
| Particle mass concentration | mg/L | | | | 600 | | 1200 | | 600 | |
| Mass concentration of red mud solids | mg/L | 400 | | | | | | | | |
| scaling runs | | 5 | | | | | | | | |
| γ (Si) | mg/L | 282 | 59 | 77 | 39 | 42 | 59 | 91 | 53 | 54 |
| *ΔS* | % | | 79.1 | 72.2 | 86.2 | 85.1 | 79.1 | 67.7 | 81.2 | 80.9 |
| Average *ΔS* | % | | 75.9 | | 85.6 | | 73.4 | | 81.1 | |

* Goethite nanoparticles (Sigma catalog # 72 0704)
** $TiO_2$ nanopowder (Sigma catalog # 718467)

**Example 3 Comparison between standard PT with compound 1 and composite coating pre-treatment with compound 1 and varied amounts of $TiO_2$ nanoparticles**

The standard PT of bombs with compound **1** (1000 mg/L) alone in no-Si SBL resulted in wall scale inhibition (Test 3.2 in Table 3) Δ*S* of approximately 90.1 % after four scaling runs (bombs rotated on the carousel for 75 min at 150 °C for each run), SBL containing 400 mg/L red mud.

For comparison, the bombs were treated with compound **1** (1000 mg/L) and varied amounts of $TiO_2$ nanoparticles (mass concentrations in the treatment fluid of 200 mg/L, 400 mg/L, 600 mg/L, and 800 mg/L) in no-Si SBL (Test 3.3 - 3.6 in Table 6). After four scaling runs} all the composite coating pre-treatment runs provided better wall scale inhibition (between 92.3 % and 96.1 %) than the standard PT run. There was a clear trend that wall scale inhibition activities increased with the increase of the $TiO_2$ particle concentration in the PT solutions.

Table 3

| Test | unit | 3.1 | 3.2 | 3.3 | 3.4 | 3.5 | 3.6 |
|---|---|---|---|---|---|---|---|
| mass concentration of Inhibitor (compound 1) | mg/L | 0 | 1000 | | | | |
| particle type | | none | none | $TiO_2$** | | | |
| particle size | nm | | | < 21 | | | |
| particle mass concentration | mg/L | | | 200 | 400 | 600 | 800 |
| mass concentration of red mud solids | mg/L | 400 | | | | | |
| scaling runs | | 4 | | | | | |
| γ (Si) | mg/L | 222 | 22 | 17 | 15 | 13 | 8.6 |
| *ΔS* | % | | 90.1 | 92.3 | 93.2 | 94.1 | 96.1 |

These results show the correlation between reduction in wall scale Δ*S* and the $TiO_2$ nanoparticle concentrations in the PT solutions.

**Example 4 - Composite Coating pre-treatment with Compound 1 and six Different Types of Inorganic Particles**

Six types of inorganic particles with different compositions and particle sizes were tested in the composite coating pre-treatment: iron oxide powder (Sigma#310050), iron oxide powder (Sigma#544884), copper oxide powder (Sigma#544868), copper iron oxide powder (Sigma#641723), dried Alcoa underflow (U/F) red mud ("RM"), and colloidal silica Ludox AM (W.R. Grace & Co., Sigma#420875).

The PT of bombs with compound **1** (1000 mg/L) alone in no-Si SBL resulted in wall scale reduction Δ*S* (Test

4.2 in Table 4) of approximately 58.3 % after three scaling runs (bombs rotated on the carousel for 75 min at 150 °C for each run, SBL containing 400 mg/L red mud). Composite coating pre-treatment according to the present invention of bombs with compound 1 (1000 mg/L) and 800 mg/L of inorganic particles (Test 4.3 to 4.8 in Table 4) yielded better wall scale reduction ($\Delta S$ between 64.8 % and 91.0 %) than the standard PT. Example 4 demonstrates that a wide range of inorganic particles with regard to the chemical composition and particle size (from 1 nm to 10 $\mu$m) can be utilized in the composite coating pre-treatment to achieve improved antiscalant performance over the standard PT.

Table 4

| Test | unit | 4.1 | 4.2 | 4.3 | 4.4 | 4.5 | 4.6 | 4.7 | 4.8 |
|---|---|---|---|---|---|---|---|---|---|
| mass concentration of Inhibitor (compound 1) | mg/L | 0 | 1000 | | | | | | |
| particle type | | none | none | $Fe_2O_3$ | $Fe_2O_3$ | CuO | $CuFe_2O_4$ | RM | $SiO_2$ |
| particle size | nm | | | <5 | < 50 | < 50 | < 100 | 1 $\mu$m .. 10 $\mu$m | 4 |
| particle mass concentration | mg/L | | | 800 | | | | | |
| mass concentration of red mud solids | mg/L | 400 | | | | | | | |
| scaling runs | | 3 | | | | | | | |
| $\gamma$ (Si) | mg/L | 70.8 | 29.5 | 16.7 | 18.1 | 9.8 | 6.4 | 15 | 24.9 |
| $\Delta S$ | % | | 58.3 | 76.4 | 74.4 | 86.2 | 91 | 78.8 | 64.8 |

**Example 5 - Effects of treatment with inorganic particles only on wall scale inhibition**

The effects of treatment with only inorganic particles on wall scale inhibition were investigated to clarify that the advantage of double layer PT over the standard PT is due to the synergy between the scale inhibiting compound and inorganic particles.

For the blank run (Test 5.1 in Table 5), the bomb was treated with no-Si SBL only at 100 °C, and three scaling runs were conducted with the treated bomb (bombs rotated on the carousel for 75 min at 150 °C for each run, SBL containing 400 mg/L red mud).

For the particle treatment runs (Tests 5.2 to 5.9 in Table 5), the bomb was treated with a dispersion of inorganic particles with a mass concentration of 800 mg/L in no-Si SBL at 100 °C. Compared with the blank run (Test 5.1), after three scaling runs, all the particle treatment runs generated similar or more wall scale based on the ICP-DES measurements. These data suggested that surface treatment with only inorganic particles does not do any good to inhibit scale formation on steel walls. Therefore, example 5 demonstrates the synergy between the scale inhibiting compound and inorganic particles to inhibit wall scale formation more efficiently than the standard PT.

Table 5

| Test | unit | 5.1 | 5.2 | 5.3 | 5.4 | 5.5 | 5.6 | 5.7 | 5.8 | 5.9 |
|---|---|---|---|---|---|---|---|---|---|---|
| mass concentration of Inhibitor (compound **1**) | mg/L | 0 | | | | | | | | |
| particle type | | none | $Fe_2O_3$ | $Fe_2O_3$ | CuO | $CuFe_2O_4$ | RM | $SiO_2$ | $TiO_2$ | Goethite |
| particle size | nm | | < 5 | < 50 | < 50 | < 100 | 1 $\mu$m .. 10 $\mu$m | 4 | 21 | < 30 |
| Particle mass concentration | mg/L | | 800 | | | | | | | |

(continued)

| Test | unit | 5.1 | 5.2 | 5.3 | 5.4 | 5.5 | 5.6 | 5.7 | 5.8 | 5.9 |
|---|---|---|---|---|---|---|---|---|---|---|
| mass concentration of red mud solids | mg/L | 400 | | | | | | | | |
| scaling runs | | 3 | | | | | | | | |
| $\gamma$(Si) | mg/L | 146 | 158 | 160 | 163 | 172 | 176 | 273 | 155 | 152 |
| $\Delta S$ | % | | -8.2 | -9.6 | -12 | -18 | -21 | -87 | -6.2 | -4.1 |

## Claims

**1.** A process for reducing aluminosilicate containing scale in a Bayer process, comprising:

- identifying a Bayer process equipment surface that is subject to scale formation during the Bayer process;
- contacting the identified Bayer process equipment surface with an amount of a scale inhibiting composition effective to form a treated surface that is more resistant to scale formation upon subsequent contact with a Bayer process stream than an otherwise comparable untreated surface;
wherein the scale inhibiting composition comprises

  - a liquor L which is an aqueous solution of one or more water-soluble salts having at least a mass fraction of 0.004 % of total dissolved salts, or an aqueous solution having a pH of at least 11.0,
  - a silicon-containing compound **I** having one or more Si(OR")$_n$ groups; and wherein n is an integer from 1 to 3; and R" is H, $C_1$- to $C_{20}$- alkyl, $C_6$- to $C_{12}$-aryl, $C_7$- to $C_{20}$- aralkyl, $C_2$- to $C_{20}$- alkenyl, any of which organic groups may be substituted, a metal ion of groups 1 or 2 of the periodical system of the elements in the 2007 numbering, or $NR^I_4$; where each $R^I$ is independently chosen from H, $C_1$- to $C_{20}$- alkyl, $C_6$- to $C_{12}$- aryl, $C_7$- to $C_{20}$- aralkyl, $C_2$- to $C_{20}$-alkenyl, any of which organic groups may be substituted; and
  - inorganic particles **P** selected from the group consisting of oxides, mixed oxides, hydroxides, and nitrides, each of elements of groups 2 to 15 of the periodic table of the elements, and

- contacting the treated surface with the Bayer process stream.

**2.** The process of claim 1, wherein the inorganic particles **P** are selected from the group consisting of oxides, mixed oxides, hydroxides, and mixed hydroxides of elements of groups 2 to 14 of the periodic table of the elements.

**3.** The process of any of claims 1 or 2 wherein the inorganic particles **P** are oxidic particles comprising oxides of metals of groups 2 to 14 of the periodic system, from the beryllium group to the carbon group, and also mixed oxides of these elements, wherein ferrates, titanates, aluminates, and silicates are understood to be mixed oxides of iron, titanium, aluminium, or silicon.

**4.** The process of any of claims 1 to 3 wherein the inorganic particles **P** have a particle size of from 0.1 nm to 20 $\mu$m, as determined by any of the processs of dynamic light scattering, laser diffraction, scanning electron microscopy, and optical microscopy.

**5.** The process of claim 1, wherein the silicon-containing compound **I** is a polymer or a polymeric reaction product.

**6.** The process of claim 5 wherein the silicon containing compound **I** is a polymer or polymeric reaction product **I1** having pendant thereto a group or an end group according to Formula IV

$$-Si(OR")_3 \qquad (IV)$$

where R" is, independently for each occurrence, H, optionally substituted $C_1$- to $C_{10}$- alkyl, optionally substituted $C_6$- to $C_{12}$- aryl, or **M,** where **M** is a group I metal ion, a group II metal ion, or $N(R^4)_4^+$, with $R^4$ being, independently for each occurrence, H or an optionally substituted $C_1$- to $C_{10}$- linear, branched, or cyclic alkyl group, and **M** is preferably $Na^+$, $K^+$ or $NH_4^+$.

**7.** The process of claim 6 wherein, in the silicon containing compound **I1**, the pendant group or end group are bound to the polymer according to Formula V

$$- G - R - X - R' - Si(OR)_3 \qquad (V)$$

where G is a direct bond, -NH -, - NR" - , or - O -; R is a direct bond, >C=O, - O- , $C_1$- to $C_{10}$-alkanediyl, $C_6$- to $C_{10}$-arenediyl, or $C_7$- to $C_{10}$- aryl-alkanediyl; X is a direct bond, -NH -,-NR"-, or - O -, amide - CO - NH-, urethane - O - CO - NH -, or urea - NH - CO - NH -; R' is a direct bond, - O -, $C_1$- to $C_{10}$- alkanediyl, $C_6$- to $C_{10}$- arenediyl, or $C_7$- to $C_{10}$- aryl-alkanediyl; and R" is H, $C_1$- to $C_{10}$- alkanediyl, $C_6$- to $C_{10}$- arenediyl, or $C_7$- to $C_{10}$- aryl-alkanediyl; Na, K or $NH_4^+$.

**8.** The process of claim 5 wherein the silicon-containing compound I is a polymer or a polymeric reaction product **I2** comprising a unit of Formula (I) and a unit of Formula (II)

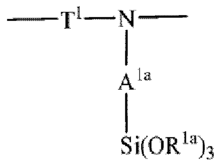
(I)

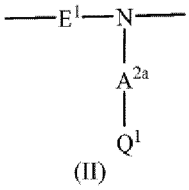
(II)

,

wherein

$T^1$ and $E^1$ are each independently a first optionally substituted bivalent hydrocarbyl group comprising from two to forty carbon atoms;
$Q^1$ is H or a second optionally substituted univalent hydrocarbyl radical comprising from one to twenty carbon atoms;
$A^{1a}$ and $A^{2a}$ are each independently a direct bond or an organic bivalent connecting group comprising from one to twenty carbon atoms;
$R^{1a}$ is H, optionally substituted $C_1$- to $C_{20}$- alkyl, optionally substituted $C_6$- to $C_{12}$ -aryl, optionally substituted $C_7$- to $C_{20}$- aralkyl, optionally substituted $C_2$- to $C_{20}$- alkenyl, Group 1 metal ion, Group 2 metal ion, or $NR^{2a}{}_4$, where each $R^{2a}$ is independently selected from H, optionally substituted $C_6$- to $C_{12}$ -aryl, optionally substituted $C_7$- to $C_{20}$- aralkyl, and optionally substituted $C_2$- to $C_{20}$- alkenyl.

**9.** The process of any of claims 5 to 8 wherein the polymer or polymeric reaction product has a mass average molar mass of at least 500 g/mol.

**10.** The process of claim 8 wherein the organic bivalent connecting groups $A^{1a}$ and $A^{2a}$ are each independently represented by the sequence $-A^{3a}-A^{4a}-A^{5a}-A^{6a}-$, wherein:

- $A^{3a}$ is a direct bond, $-NR^{3a}-$ or -O-, where $R^{3a}$ is H or $C_1$- to $C_3$- alkyl;
- $A^{4a}$ is a direct bond, >C=O, optionally substituted $C_1$- to $C_{10}$- alkanediyl, or optionally substituted $C_6$- to $C_{12}$-arenediyl;
- $A^{5a}$ is a direct bond, -O-, $-NR^{4a}-$, amide - CO - NH-, urethane - O - CO - NH -, or urea -NH - CO - NH -, where $R^{4a}$ is H or $C_1$- to $C_3$- alkyl; and
- $A^{6a}$ is a direct bond, -O-, optionally substituted $C_1$- to $C_{20}$- alkanediyl, optionally substituted $C_2$- to $C_{20}$- alkenediyl or optionally substituted $C_7$- to $C_{20}$- aryl-alkanediyl; and

wherein at least one of the organic connecting groups $A^{1a}$ and $A^{2a}$ is $-CH_2-CH(OH)-CH_2-O-$ or an optionally substituted $C_1$- to $C_{10}$- alkanediyl, or optionally substituted $C_6$- to $C_{12}$-arenediyl group.

**11.** The process of claim 8 wherein $Q^1$ is chosen from butyl, 2-ethylhexyl, $C_8$- to $C_{10}$- alkyl, phenyl, cresyl, nonylphenyl, cetyl, octenyl, and octadecyl.

**12.** The process of claim 1 wherein the silicon-containing compound **I** is a reaction product **I3** of at least a polyamine **I31,** a first nitrogen-reactive compound **I32**, and a second nitrogen-reactive compound **I33**, wherein:

- the polyamine **I31** comprises

- a recurring unit of formula - $(CH_2)_t$ - $NR^6$ -, where $R^6$ is H, an optionally substituted $C_1$- to $C_{20}$- alkyl group, an optionally substituted $C_6$- to $C_{12}$- aryl group, an optionally substituted $C_7$- to $C_{20}$- aralkyl group, or an optionally substituted $C_2$- to $C_{20}$-alkenyl group, and t is from 1 to 10, preferably from 2 to 6,
- a recurring unit of formula - $CH_2$ - CH(Z - $NR^7_2$) -, where Z is a direct bond or a bivalent group selected from $C_1$- to $C_{10}$-alkanediyl, $C_6$- to $C_{12}$-arenediyl, and $C_7$ - to $C_{20}$- alkyl-arenediyl groups, and $R^7$ is H, an optionally substituted $C_1$- to $C_{20}$- alkyl group, an optionally substituted $C_6$- to $C_{12}$- aryl group, an optionally substituted $C_7$-to $C_{20}$- aralkyl group, or an optionally substituted $C_2$- to $C_{20}$- alkenyl group, or
- a moiety of formula $R^8_2N$ - X - $NR^8_2$, where X is a divalent optionally substituted hydrocarbyl group having from two to forty carbon atoms, and $R^8$ is, independently for each occurrence, H, an optionally substituted $C_1$- to $C_{20}$- alkyl group, an optionally substituted $C_6$- to $C_{12}$- aryl group, an optionally substituted $C_7$- to $C_{20}$-aralkyl group, or an optionally substituted $C_2$- to $C_{20}$- alkenyl group.,

- the first nitrogen-reactive compound **I32** comprises a -$Si(OR^{1b})_3$ group and a nitrogen-reactive group, where $R^{1b}$ is H, optionally substituted $C_1$- to $C_{20}$- alkyl, optionally substituted $C_6$- to $C_{12}$- aryl, optionally substituted $C_7$- to $C_{20}$- aralkyl, optionally substituted $C_2$- to $C_{20}$ alkenyl, a Group 1 metal ion, a Group 2 metal ion, or $NR^{2b}_4$, each $R^{2b}$ being independently selected from H, optionally substituted optionally substituted $C_1$- to $C_{20}$- alkyl, optionally substituted $C_6$- to $C_{12}$ -aryl, optionally substituted $C_7$- to $C_{20}$- aralkyl, optionally substituted $C_2$- to $C_{20}$- alkenyl, the nitrogen-reactive group being selected from the group consisting of an organic halide group which is preferably an alkyl, alkenyl, or aralkyl halide group, an epoxide group, an isocyanate group, an acid group, an acid anhydride group, an acyl halide group, and a sulfate group, and
- the second nitrogen-reactive compound **I33** comprises a nitrogen-reactive group as detailed supra for **I32**, and does not contain a $Si(OR^{1b})_3$ group.

**13.** The process of claim 12 wherein the reaction product has a mass average molar mass of at least about 500 g/mol.

**14.** The process of claim 12 wherein the first nitrogen-reactive compound **I32** is chosen from 3-glycidoxypropyltrimethoxysilane, 3-glycidoxypropyltriethoxysilane, and 3-chloropropyltrimethoxysilane.

**15.** The process of claim 12, wherein the second nitrogen-reactive compound **I33** is chosen from alkylhalides, glycidoxy ethers and alkyl epoxides.

**16.** The process of claim 1, wherein the silicon-containing compound I is a polymer **I4** according to Formula (III)

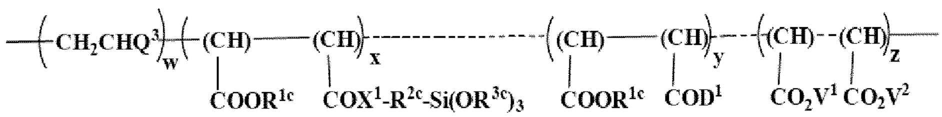

(III)

wherein

- 1 % ≤ w ≤ 99.9 %,0.1% ≤ x ≤ 50%,0% ≤ y ≤ 50%,0% ≤ z ≤ 50 % ; and w + x + y + z = 100 %;
- $Q^3$ is $C_1$- to $C_{10}$-alkyl, $C_6$- to $C_{12}$- aryl, an ether group which is preferably an - O - alkyl or - O aryl group with a $C_1$- to $C_{10}$- alkyl or a $C_6$- to $C_{12}$- aryl group, or $COX^1R^{1c}$ where $X^1$ is -O-, -NH-, or -$NP^1$- where $P^1$= $C_1$- to $C_3$- alkyl, $C_6$- to $C_{12}$- aryl;
- $R^{1c}$ is H, Na, K, $NH_4$, $C_1$- to $C_{10}$- alkyl or $C_6$- to $C_{12}$- aryl;
- $R^{2c}$ is $C_1$- to $C_{10}$- alkyl or $C_6$- to $C_{12}$- aryl;
- $V^1$ and $V^2$ are independently H, $C_1$- to $C_3$-alkyl, $C_6$- to $C_{12}$- aryl, Na, K or $NH_4$ or together form an anhydride ring of the structure:

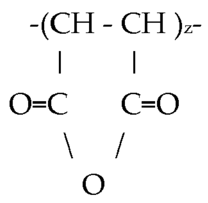

- $R^{3c}$ is H, $C_1$- to $C_3$- alkyl, $C_6$- to $C_{12}$- aryl, Na, K or $NH_4$; and
- $D^1$ is $-NR^{4c}{}_2$ or $-OR^{4c}$, wherein $R^{4c}$ is H, $C_1$- to $C_{20}$- alkyl, $C_2$- to $C_{20}$- alkenyl or $C_6$- to $C_{12}$-aryl.

**17.** The process of claim 1 wherein the silicon-containing compound **I** is a polysaccharide **I5** having pendant thereto a group or an end group containing $-Si(OR^{1e})_3$, wherein $R^{1e}$ is H, $C_1$- to $C_{10}$- alkyl, $C_6$- to $C_{12}$-aryl, Na, K or $NH_4$.

**18.** The process of claim 1 wherein the silicon-containing compound I is a reaction product of an amine-containing molecule **I61** and an amine-reactive molecule **I62** containing at least one amine-reactive group per molecule and at least one $-Si(OR^{5e})_n$, group per molecule, wherein $R^{5e}$ is hydrogen, $C_1$- to $C_{12}$- alkyl, $C_6$- to $C_{12}$- aryl, Na, K, Li, or $NH_4$.

**19.** The process of claim 1 wherein the silicon-containing compound **I** comprises the reaction product **I7** of a first component **I71** having a general formula X or XI

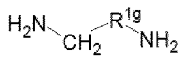

X

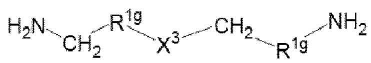

XI

wherein $R^{1g}$ is independently $-CH_2-$, or $-CH_2-CH_2-$ ; and $X^3$ is -NH-, $-NH-R^{1g}-NH-$, or $-NH-R^{1g}-NH-R^{1g}-NH-$;
glycidoxyalkyl-trialkoxysilane as a second component **I72**; and
$C_1$- to $C_{20}$-alkyl glycidyl ether as a third component **I73**;
wherein synthesis of the reaction product **I7** proceeds by combining the first component **I71** with the glycidoxyalkyl-trialkoxysilane **I72** at a reactive hydrogen atom of the first component to form an intermediate **I712,** and the intermediate **I712** then reacted with the $C_1$-to $C_{20}$-alkyl glycidyl ether **I73** to form the silicon-containing reaction product **I7**.

**20.** The process of claim 1 wherein the silicon-containing compound **I** is a polymer **I8** having pendant thereto a group or end group according to Formula XII

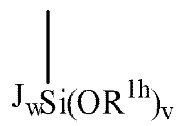

(XII)

wherein v is an integer of either 1 or 2;

- v + w = 3;
- $R^{1h}$ is chosen from H, $C_1$- to $C_{12}$- alkyl, $C_6$- to $C_{12}$- aryl, Na, K, Li, and $NH_4$; and
- J is chosen from H and a hydrocarbon group having a number of carbon atoms within the range of from 1 to 20.

**21.** The process of claim 1 wherein the Bayer process stream comprises a mass fraction of suspended solids in a range of about 0.01 % to about 60 %, based on total mass of the Bayer process stream.

**22.** The process of claim 21 wherein the solids are chosen from iron oxides and aluminosilicates.

**23.** The process of claim 22 wherein the solids are iron oxides.

Europäisches Patentamt
European Patent Office
Office européen des brevets

# EUROPEAN SEARCH REPORT

Application Number
EP 15 20 3280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2015/100196 A1 (CYTEC IND INC [US]) 2 July 2015 (2015-07-02) * the whole document * ----- | 1-23 | INV. C01F7/06 C02F5/10 C23F14/02 |
| E | WO 2016/064432 A1 (CYTEC IND INC [US]) 28 April 2016 (2016-04-28) * the whole document * ----- | 1-23 | |
| A | US 2013/189529 A1 (KILDEA JOHN D [AU] ET AL) 25 July 2013 (2013-07-25) * claims * ----- | 1-23 | |

TECHNICAL FIELDS SEARCHED (IPC)

C01F
C02F
C23F

The present search report has been drawn up for all claims

1

| Place of search | Date of completion of the search | Examiner |
|---|---|---|
| Munich | 29 June 2016 | Stratford, Katja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 20 3280

This annex lists the patent family members relating to the patent documents cited in the above-mentioned European search report. The members are as contained in the European Patent Office EDP file on
The European Patent Office is in no way liable for these particulars which are merely given for the purpose of information.

29-06-2016

| Patent document cited in search report | Publication date | Patent family member(s) | Publication date |
|---|---|---|---|
| WO 2015100196 A1 | 02-07-2015 | TW 201532975 A | 01-09-2015 |
| | | US 2015175844 A1 | 25-06-2015 |
| | | WO 2015100196 A1 | 02-07-2015 |
| WO 2016064432 A1 | 28-04-2016 | US 2016108253 A1 | 21-04-2016 |
| | | WO 2016064432 A1 | 28-04-2016 |
| US 2013189529 A1 | 25-07-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012115769 A2
- US 4731259 A
- WO 2015100196 A1
- US 7999065 B2


### Non-patent literature cited in the description


- **SPITZER et al.** *LIGHT METALS,* 2008, 57-62